# EUROPEAN PATENT SPECIFICATION

(11) **EP 2 995 555 B1**
(45) Date of publication and mention of the grant of the patent: **06.02.2019**
(21) Application number: 15183319.1
(22) Date of filing: 01.09.2015
(51) Int. Cl.: B64D 27/02

(54) **PROPULSION SYSTEM**
ANTRIEBSSYSTEM
SYSTÈME DE PROPULSION

(30) Priority: 02.09.2014 US 201414475146
(43) Date of publication of application: 16.03.2016
(73) Proprietor: Hamilton Sundstrand Corporation, Charlotte, NC 28217 (US)
(72) Inventor: HIMMELMAN, Richard A., Beloit, WI Wisconsin 53511 (US); PERKINSON, Robert H., Stonington, MA Massachusetts 06378 (US); TONGUE, Stephen E., Hampden, MA Massachusetts 01036 (US)
(74) Representative: Dehns

(56) References cited:
- WO-A2-2009/050456
- DE-A1-102010 021 022
- DE-A1-102010 021 026
- US-A- 1 851 857
- US-A1- 2009 145 998
- US-A1- 2011 147 105
- US-A1- 2014 203 760

## Description

### FIELD

The present invention relates to the field of propulsion systems, and more specifically, cross-redundant hybrid electric pulsed power propulsion systems for aircraft.

### BACKGROUND

In aircraft propulsion systems, a turbine often provides thrust, for example, via a propulsor such as a turbofan. However, a turbine becomes inefficient when operated at intermediate throttle settings. Moreover, often the aircraft has a separate auxiliary power unit and/or a generator to provide electrical power, but these additional systems increase the weight of the aircraft.

A prior art method of operating a propulsion system and propulsion systems of a helicopters having combustion engines which can also be turbines, electrical engines and generators driven by the combustion engines for charging batteries is disclosed in DE 10 2010 021022. Document US2012/0209456 discloses an unmanned aircraft vehicle with a hybrid power system comprising an internal combustion engine (ICE) driving a propeller. In one embodiment, the ICE is placed in front of the aircraft and ensures adequate cooling and aircraft stability while a second propeller at the rear of the aircraft is driven by an electrical motor (EM). The EM can also be used in generator mode when the rear propeller is windmilling. Other prior art propulsion systems and methods of operating the same are disclosed in US 2014/203760, US 2011/147105, US 2009/145998, US 1 851 857, WO 2009/050456 and DE 10 2010 021026.

### SUMMARY OF THE INVENTION

From one aspect, the present invention provides a method of operating an aircraft propulsion system in accordance with claim 1.

From another aspect, the present invention provides an aircraft with a propulsion system in accordance with claim 4.

### BRIEF DESCRIPTION OF THE DRAWINGS

A more complete understanding of the present invention may be derived by referring to the detailed description and claims when considered in connection with the Figures, where like reference numbers refer to similar elements throughout the Figures, and:
FIG. 1 illustrates a block diagram of an example propulsion system having an energy storage system, in accordance with various embodiments;
FIG. 2 illustrates a block diagram of an example of two propulsion systems each having an energy storage system, and joined together by an interconnection element, in accordance with various embodiments;
FIG. 3 illustrates various components of an example propulsion system having an energy storage system, in accordance with various embodiments;
FIG. 4 illustrates various components of an example of two propulsion systems each having an energy storage system, and joined together by an interconnection element, in accordance with various embodiments;
FIGS. 5A-B illustrate example propulsors according to various embodiments;
FIG. 6 illustrates a block diagram of an example propulsion system having an energy storage system and two propulsors joined together by an interconnection element, in accordance with various embodiments; and
FIG. 7 illustrates an example method of operating a propulsion system, in accordance with various embodiments.

### DETAILED DESCRIPTION

The following description is of various exemplary embodiments only, and is not intended to limit the scope, applicability or configuration of the present disclosure in any way. Rather, the following description is intended to provide a convenient illustration for implementing various embodiments including the best mode. As will become apparent, various changes may be made in the function and arrangement of the elements described in these embodiments without departing from the scope of the appended claims.

For the sake of brevity, conventional techniques for manufacturing and construction may not be described in detail herein. Furthermore, the connecting lines shown in various figures contained herein are intended to represent exemplary functional relationships and/or physical couplings between various elements. It should be noted that many alternative or additional functional relationships or physical connections may be present in a practical method of construction.

An aircraft comprises a propulsion system. The propulsion system includes a turbine engine. Often, however, turbine engines are inefficient when operated at intermediate throttle settings. During different phases of flight, the turbine may be desired to operate at intermediate throttle settings, decreasing the efficiency of energy consumption. This raises the cost of operating the aircraft because the fuel is not utilized as efficiently at intermediate throttle settings as at a maximal or near maximal efficiency point, such as wide-open throttle or another designed maximal or near maximal efficiency point.

As disclosed herein, one manner of addressing these inefficiencies includes implementing an energy storage system that receives energy from the turbine and store it for later use. At phases of flight during which the turbine would ordinarily be called on to operate at an intermediate throttle setting, instead, the turbine is shut down, and the energy storage system may provide stored energy to a propulsor, so that the aircraft is propelled without a need for the turbine to be running. In this manner, the turbine is said to be pulsed. Specifically, at times when the turbine would otherwise be called on to operate in a less than optimally efficient manner, rather than utilizing the turbine, stored energy is used to propel the aircraft instead.

Furthermore, aircraft may include multiple propulsors. For example, a twin-engine aircraft may have a turbine for each wing. The energy storage system can be connected in such a manner that it stores energy from either turbine. Thus, further efficiency gains may be realized by only operating a single turbine to charge the energy storage system. Still furthermore, the need for an aircraft auxiliary power unit may be eliminated by drawing aircraft electrical power from the energy storage system. Furthermore, the need for an emergency ram air turbine may be eliminated. For example, during a turbine failure, the turbine and/or propulsors are permitted to windmill in response to passing air. The kinetic energy of the windmilling turbine and/or propulsors is stored in an energy storage system, where it may be drawn by emergency systems, such as emergency hydraulic systems, or by engine re-starter systems, or emergency electrical systems, such as emergency communications systems, or by any other suitable aircraft system.

Furthermore, when the aircraft is on the ground, it may be plugged into the airport electrical grid to recharge the energy storage system. As the aircraft is pushed back and taxiing, energy may be flowed from the energy storage system to the other aircraft systems, such as electrical systems, avionics systems and/or the aircraft propulsors. Thus, the turbines may be left off during ground operations. The turbines may be started for takeoff and climb, and may be utilized to also recharge the energy storage system. During cruise, the turbines may be turned off and the energy storage system may provide energy for the propulsors. One or more turbines may be restarted as needed to recharge the energy storage system. Thus, in addition to saving the fuel burned by not operating the turbine at non-optimal power settings, the aircraft auxiliary power unit may be eliminated and the electrical power for other aircraft systems can provided by the energy storage system.

Furthermore, in the event that all turbines fail during flight, energy can be drawn from the energy storage system to provide emergency electrical power to the other aircraft systems. If the energy from the energy storage system becomes depleted, the aircraft propulsors are permitted to windmill, causing the propulsors to act as generators, recharging the energy storage system. In this manner, the ram air turbine may be eliminated, as well as its cost, mass, and maintenance issues.

Consequently, one may appreciate that one or multiple propulsions systems may be implemented and may be interconnected. The system stores energy and may release energy, permitting the turbine to avoid operation in inefficient ranges, as well as eliminating heavy and/or costly auxiliary power units and/or emergency ram air turbines.

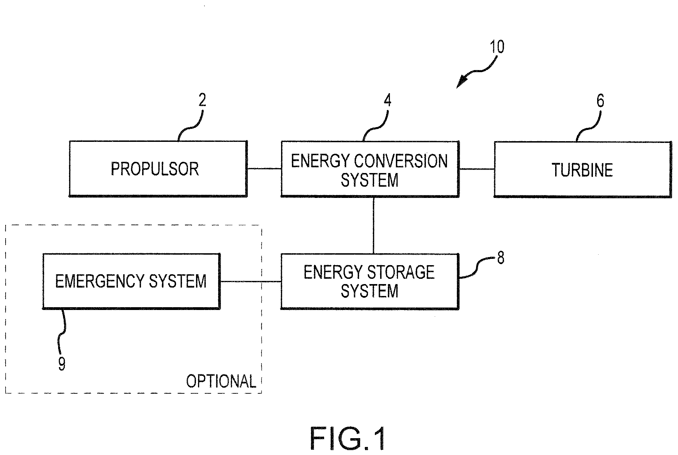

With reference now to FIG. 1, a propulsion system 10 comprises a propulsor 2, an energy conversion system 4, a turbine 6, and an energy storage system 8. The propulsion system may further comprise an emergency system 9. The propulsion system accepts energy from the turbine 6 and converts it via energy conversion system 4 to a form suited to drive the propulsor 2 and for storage in the energy storage system 8.

The propulsor 2 comprises a kinetic energy imparting apparatus. Specifically, the propulsor comprises a propeller system driven by an electrical motor. In various embodiments, the propulsor may also comprise a gear reduction apparatus disposed between the propeller system and the electrical motor, whereby the electrical motor drives the propeller system. The propulsor receives electrical energy from an energy conversion system 4 and may utilize it to turn an electrical motor, thus turning a propeller. The propulsor comprises a propeller, or may comprise a ducted fan, by which thrust is imparted to an airframe. The propulsor also provides a further mechanism for the sourcing of energy, such as to eliminate the need for an emergency ram air turbine, or otherwise to provide energy to the energy conversion system. In accordance with the present invention the propulsor is permitted to windmill in response to passing air. The kinetic energy of the windmilling propulsor is stored in an energy storage system, where it may be drawn by emergency system 9, such as emergency hydraulic systems, or by engine re-starter systems, or emergency electrical systems, such as emergency communications systems, or by any other suitable aircraft system.

In various embodiments, the energy conversion system 4 comprises a mechanical to electrical energy converting apparatus. For example, the energy conversion system 4 may receive mechanical energy from a turbine 6 via a rotating shaft and may convert this energy into electricity, such as by a generator. The energy conversion system 4 directs this electrical energy to a propulsor 2, or to an energy storage system 8, or to both a propulsor 2 and to an energy storage system 8. The energy conversion system 4 receives electrical energy from an energy storage system 8 and conveys it to a propulsor 2. Thus, the energy conversion system 4 also passes through electrical energy from an energy storage system 8 to a propulsor 2, although it may also convert electrical energy among different voltages, waveforms, currents, phases, or other forms. The energy conversion system 4 further receives electrical energy from an energy storage system 8 and conveys it to a turbine 6. For example, in the event that the turbine needs to be started, the energy conversion system 4 may receive electrical energy from the energy storage system 8, convert it to mechanical energy, such as by a motor (e.g., a generator run in reverse), and deliver it to the turbine 6 via a rotating shaft, such as for restarting the turbine.

The energy storage system 8 comprises an electrical energy storing apparatus. For example, the energy storage system 8 may comprise one or more batteries. The energy storage system 8 receives electrical energy from an energy conversion system 4 and stores it. Furthermore, the energy storage system 8 delivers electrical energy to an energy conversion system 4, for ultimate delivery to a propulsor 2, or for conversion to mechanical energy and delivery to a turbine 6, such as for restarting the turbine 6.

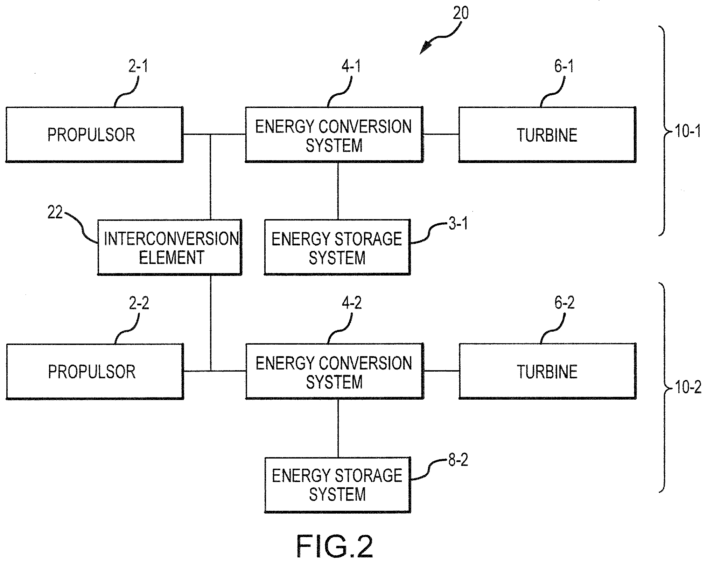

With reference to FIG. 2, multiple propulsion systems 10 may be interconnected. For example, an interconnected propulsion system 20 may comprise a first propulsion system 10-1 and a second propulsion system 10-2. The first propulsion system 10-1 may comprise a first energy conversion system 4-1, a first turbine 6-1, a first energy storage system 8-1 and a first propulsor 2-1 interconnected as discussed herein. Similarly, the second propulsion system 10-2 may comprise a second energy conversion system 4-2, a second turbine 6-2, a second energy storage system 8-2, and a second propulsor 2-2 interconnected as discussed herein.

An interconnected propulsion system 20 may further comprise an interconnection element 22. An interconnection element 22 may comprise electrical wiring disposed between the first propulsor 2-1 and the second propulsor 2-2. In this manner, the propulsors may be connected in parallel. Accordingly, either propulsor, and/or both propulsors may receive electrical energy from either energy conversion system, and/or both energy conversion systems. Similarly, either propulsor and/or both propulsors may deliver energy to either energy conversion system and/or both conversion systems. In various embodiments, the interconnection element 22 comprises an interconnection disposed between the first propulsor 2-1 and first energy conversion system 4-1 and connecting between the second propulsor 2-2 and the second energy conversion system 4-2. However, in further embodiments, the interconnection element 22 may be disposed between the energy conversion system and energy storage system, or any other interconnection point in the systems.

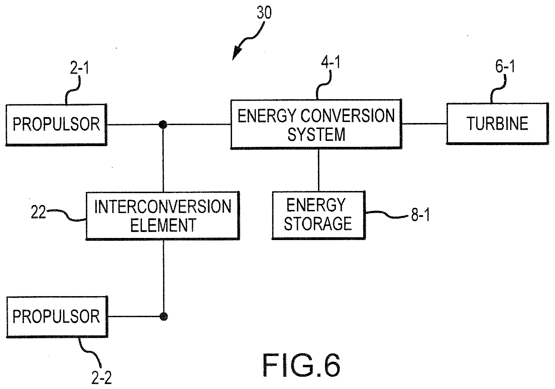

For instance, consider FIG. 6, wherein a dual-propulsor propulsion system 30 is provided. A dual-propulsor propulsion system 30 may comprise a first turbine 6-1, a first energy conversion system 4-1, and a first energy storage system 8-1, arranged as discussed herein. However, a first propulsor 2-1 may be interconnected with the first energy conversion system 4-1, and an interconnection element 22 disposed between the first propulsor 2-1 and the energy conversion system 4-1, whereby the second propulsor 2-2 is also connected to the same first energy conversion system 4-1.

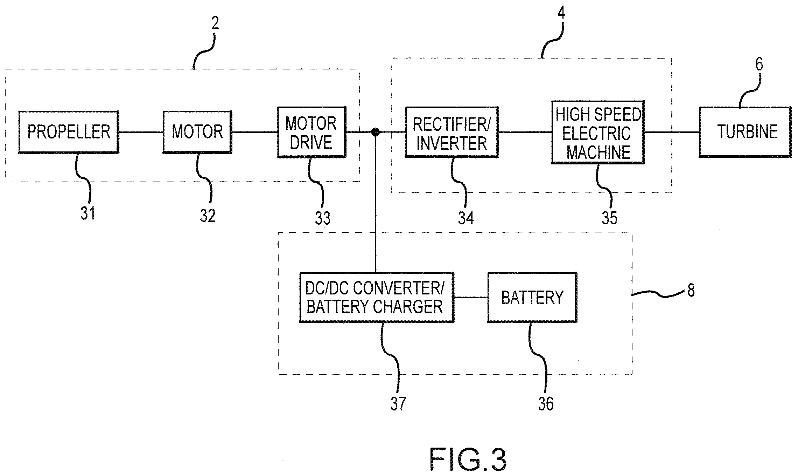

Having discussed various aspects of propulsion systems, with reference to FIG. 3, various aspects of a various details of a propulsion system 10 are provided. A turbine 6 may comprise gas turbine. However, turbine 6 may comprise various supporting systems, such as pumps, gearboxes, valves, and tubing. In various embodiments, the turbine 6 comprises a turbofan engine. In further embodiments, the turbine 6 comprises a turboprop engine, or a turbojet engine, or any other form of turbine engine. In various embodiments, the turbine 6 does not comprise a turbine engine, but comprises a fuel cell. Moreover, in still further embodiments, the turbine 6 does not comprise a turbine engine, but comprises an internal combustion engine, for example, an internal combustion engine having pistons, and/or an internal combustion engine comprising a rotary engine. Alternatively, the turbine 6 may comprise an internal combustion reciprocating engine, such as one based on Otto cycle, or Diesel cycle, or Miller cycle, or Atkinson cycle, or an internal combustion rotary engine (e.g., Wankel), or another internal combustion engine, or an external combustion continuous engine such as a gas turbine engine (based on the open Brayton cycle), or any other engine. Furthermore, the turbine 6 can be an internal combustion engine which is aspirated naturally or with forced induction (e.g., turbocharged or super-charged). The turbine 6 may have a turbocharger which may be a single or dual (twin) configuration using a centrifugal compressor directly coupled to either an axial inflow or centrifugal inflow turbine, and whose operation may be further enhanced by structures such as: variable vane geometries, articulated waste gates, blow-off/pressure relief valves, and by methods such as: intercooling, water spray injection, etc.

An energy conversion system 4 may comprise a rectifier/inverter 34. A rectifier/inverter 34 may comprise an electrical circuit comprising diodes and/or controllers and/or transistors and/or other electrical components whereby alternating-current electricity, such as that provided by a high-speed electric machine 35 (discussed below) is converted into direct-current electricity (e.g., "rectified"). Similarly, a rectifier/inverter 34 may comprise an electrical circuit comprising diodes and/or controllers and/or transistors and/or other electrical components whereby direct-current electricity, such as that provided by an energy storage system 8 (discussed below) may be converted into alternating-current electricity, such as to drive a high speed electric machine 35 as an electric motor. Thus, the rectifier/inverter 34 conditions electrical energy received from a high-speed electric machine (high speed electric machine electrical energy), conditions electrical energy received from an energy storage system (energy storage system electrical energy), and/or conditions electrical energy received from other sources, such as a windmilling propulsor.

Moreover, an energy conversion system 4 may comprise a high-speed electric machine 35. A high-speed electric machine 35 may comprise an electric motor and/or a generator depending on how it is implemented. For example, a high speed electric machine 35 may operate as a motor in response to electrical current, for example an alternating current being provided, such as by a rectifier/inverter 34. In this manner, the high-speed electric machine 35 may rotate a shaft, which may be mechanically connected to a turbine 6 and which may spin the turbine compressor such as when the turbine is being started. Furthermore, a high-speed electric machine 35 may operate as a generator in response a rotating shaft being spun, such as by a turbine 6. In response, the high-speed electric machine 35 may produce an alternating current that is provided to the rectifier/inverter 34, for rectification into a direct current and utilization by other system(s).

An energy storage system 8 is also discussed in detail. An energy storage system 8 may comprise a battery 36. Battery 36 may comprise a lithium-ion battery, a lithium-ion polymer battery, a lead acid battery, a nickel metal hydride battery, a nickel cadmium battery, a fuel cell, ultra-capacitors, super-capacitors or any other apparatus whereby electrical energy may be stored, for example, a combination of one or more ultra-capacitor and/or super-capacitor and one or more battery.

An energy storage system 8 may further comprise a DC/DC converter/battery charger 37. The DC/DC converter/battery charger 37 may receive electrical energy, such as from a propulsor 2 and/or an energy conversion system 4 and may convert it to a form suitable for storage in the battery 36. For example, the DC/DC converter/battery charger 37 may convert a direct current having a first current and first voltage to a direct current having a second current and second voltage more suitable for storage in the battery 36. Alternatively, the DC/DC converter/battery charger may convert an alternating current to a direct current suitable for storage in the battery. Similarly, the DC/DC converter/battery charger 37 may convert a direct current having a first current and a first voltage as provided by the battery into a direct current having a second current and a second voltage or into an alternating current, for example, for provision to an energy conversion system 4 and/or a propulsor 2. Thus, in this manner, the electrical energy may be transformed to any form suitable for storage in the battery 36 and for utilization by other aircraft systems when drawn from the battery 36.

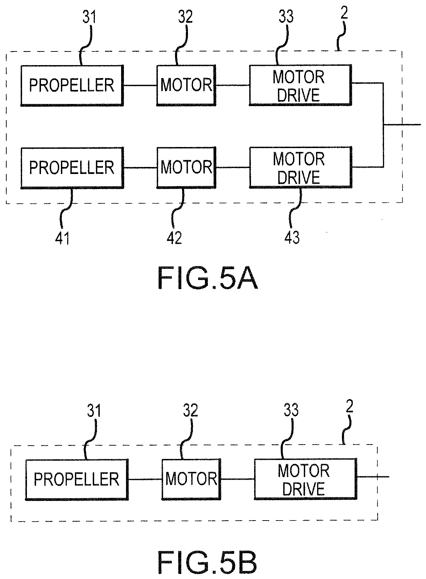

Moreover, a propulsor 2 may further comprise various embodiments. For example, with reference to FIG. 5A and FIG. 5B, a propulsor 2 may comprise different configurations. In various embodiments, with reference to FIGS. 3 and 5B, a propulsor 2 may comprise a motor drive 33, a motor 32, and a propeller 31. The motor drive 33 may receive electrical energy, and provide power and control signals to a motor 32 whereby the motor 32 may be directed to spin a propeller 31 in response.

The motor drive 33 may comprise a three-phase solid-state motor controller. For example, the motor drive 33 may receive electrical energy and provide three-phase alternating current power to the motor, in order to control the speed and direction of the motor. Alternatively, the motor drive 33 may comprise a five-phase solid-state motor controller, such as to drive a switched reluctance motor, or may comprise a six-phase solid-state motor controller, or any number 'n' phase motor controller. In various embodiments, the motor drive 33 provides pulse-width modulated power to the motor; however, in further embodiments, the motor drive 33 provides current limited power to the motor. Thus, the motor drive 33 may comprise any architecture suitable for implementation with a desired motor 32.

The motor 32 may comprise brushless motor, such as a three-phase brushless motor, or a five-phase brushless motor, or a six-phase brushless motor, or any number 'n' phase motor. The motor 32 may comprise a brushed motor. The motor 32 may comprise a switched reluctance motor. The motor 32 may comprise supporting hardware such as gearboxes, mechanical linkages, shafts, flywheels, etc.

The propeller 31 may comprise a propeller in mechanical connection to the motor 32. The propeller 31 may comprise a constant speed propeller, or a turbofan, or a constant pitch propeller, or a ducted fan, or any other mechanism by which an aircraft may be propulsed. Furthermore, the propeller 31 may comprise additional controllers and/or circuitry, for example, to control propeller pitch and/or speed. In further embodiments, the propeller 31 comprises two blades, or three blades, or four blades, or five blades, or six blades, or any number of blades and/or vanes, for example, in the event that the propeller comprises a ducted fan. The propeller may comprise a housing and/or shroud, or any apparatus whereby airflow may be directed through the blades of the propeller.

With momentary reference to FIG. 5A-B, various aspects a further embodiment of a propulsor 2 are discussed in detail. In various embodiments, a propulsor 2 comprises a single propeller 31, a single motor 32, and a single motor drive 33, as illustrated in FIG. 5B. However, in further embodiments, a propulsor 2 may comprise multiple propellers. For example, with reference to FIG. 5A, a propulsor 2 may comprise a propeller 31 driven by a motor 32 which is controlled by a motor drive 33. However, the propulsor 2 may further comprise a second propeller 41, driven by a second motor 42, which is controlled by a second motor drive 43. For example, a propulsor 2 may comprise two propellers (31, 41) which are counterrotating.

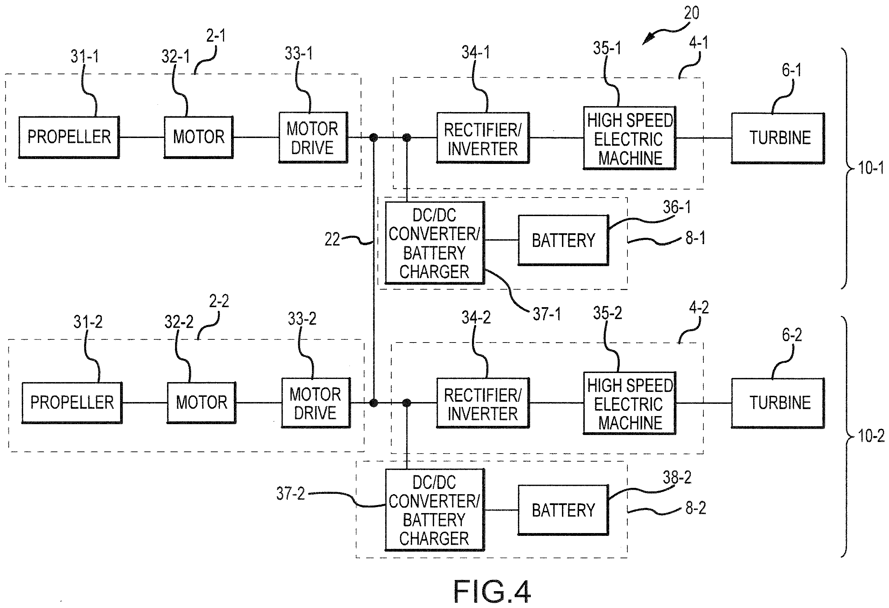

With reference to FIG. 4, one arrangement of an interconnected propulsion system 20 is illustrated in detail. For example, a first propulsion system 10-1 may comprise a first turbine 6-1, a first energy conversion system 4-1, a first energy storage system 8-1, and a first propulsor 2-1. A second propulsion system 10-2 may comprise a second turbine 6-2, a second energy conversion system 4-2, a second energy storage system 8-2, and a second propulsor 2-2. The first propulsion system 10-1 and second propulsion system 10-2 may be interconnected by an interconnection element 22 disposed as illustrated, between the first propulsor 2-1 and first energy conversion system 4-1 and interconnecting between the second propulsor 2-2 and second energy conversion system 4-2.

The first energy conversion system 4-1 may comprise a first energy conversion system high-speed electric machine 35-1 and a first energy conversion system rectifier/inverter 34-1. Similarly, the second energy conversion system 4-2 may comprise a second energy conversion system high-speed electric machine 35-2 and a second energy conversion system rectifier/inverter 34-2.

The first energy storage system 8-1 may comprise a first energy storage system battery 36-1 and a first energy storage system DC/DC converter/battery charger 37-1. Similarly, the second energy storage system 8-2 may comprise a second energy storage system battery 36-2 and a second energy storage system DC/DC converter/battery charger 37-2.

The first propulsor 2-1 may comprise a first propulsor propeller 31-1, a first propulsor motor 32-1 and a first propulsor motor drive 33-1. Similarly, the second propulsor 2-2 may comprise a second propulsor propeller 31-2, a second propulsor motor 32-2 and a second propulsor motor drive 33-2. Moreover, the first propulsor 2-1 and/or second propulsor 2-2 may be configured according to FIG. 5B, as discussed herein.

Thus, as one may appreciate, various aspects of various different embodiments discussed herein may be combined and interchanged. For example, with reference to FIG. 2, an interconnected propulsion system 20 may comprise a first propulsion system 10-1 having a propulsor according to FIG. 5A, and a second propulsion system 10-2 having a propulsor according to FIG. 5B, or also according to FIG. 5A, or comprising any other combination and/or arrangement of elements.

### Method of operation

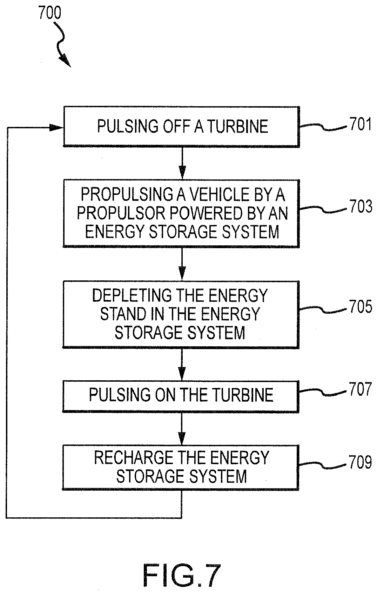

Having discussed various aspects of a propulsion system, a propulsion system may operate according to different methods. For example, with reference to Fig. 7, a method 700 may include pulsing off a turbine (Step 701). This may comprise shutting the turbine down, or may comprise retarding the turbine throttle setting to an idle setting, for example, a flight idle or a ground idle. The method may further include propulsing the aircraft by a propulsor powered by an energy storage system (Step 703). The energy stored within the energy storage system may be depleted (Step 705). Upon the depleting of the energy stored within the energy storage system, the method may include pulsing on the turbine (Step 707). This may include advancing the turbine throttle setting to an optimal efficiency setting. This may further include restarting the turbine. The energy storage system may be recharged (Step 709). Upon completion of the recharging of the energy storage system, the method 700 may then return to step 701 and the turbine may be pulsed off. In this manner, the duty cycle of the turbine is decreased such that the turbine spends less time operating at non-optimal throttle settings.

Having discussed various aspects of a propulsion system, a propulsion system may be made of many different materials or combinations of materials. For example, various components of the system may be made from metal. For example, various aspects of an propulsion system may comprise metal, such as titanium, aluminum, steel, or stainless steel, though it may alternatively comprise numerous other materials configured to provide support, such as, for example, composite, ceramic, plastics, polymers, alloys, glass, binder, epoxy, polyester, acrylic, or any material or combination of materials having desired material properties, such as heat tolerance, strength, stiffness, or weight. In various embodiments, various portions of a propulsion system as disclosed herein are made of different materials or combinations of materials, and/or may comprise coatings.

In various embodiments, a propulsion system may comprise multiple materials, or any material configuration suitable to enhance or reinforce the resiliency and/or support of the system when subjected to wear in an aircraft operating environment or to satisfy other desired electromagnetic, chemical, physical, or material properties, for example radar signature, heat generation, efficiency, electrical output, strength, or heat tolerance.

In various embodiments, various components may comprise an austenitic nickel-chromium-based alloy such as Inconel®, which is available from Special Metals Corporation of New Hartford, New York, USA. In various embodiments, various components may comprise ceramic matrix composite (CMC). Moreover, various aspects may comprise refractory metal, for example, an alloy of titanium, for example titanium-zirconium-molybdenum (TZM).

Various fluids such as hydraulic fluid, cooling oils, and fuel may be incorporated into various components. For example, hydraulic fluid may comprise any hydraulic oil or fluid. Moreover, fuel may be a kerosene-type jet fuel such as Jet A, Jet A-1, JP-5, and/or JP-8. Alternatively, fuel may be a wide-cut or naphtha-type jet fuel, such as Jet B and/or JP4. Furthermore, fuel may be a synthetic fuel, such as Fischer-Tropsch Synthetic Paraffinic Kerosene (FT-SPK) fuel, or Bio-Derived Synthetic Paraffinic Kerosene (Bio-SPK), or may be any other suitable fuel, for example, gasoline or diesel.

While the systems described herein have been described in the context of aircraft applications; however, one will appreciate in light of the present disclosure, that the systems described herein may be used in various other applications, for example, different vehicles, such as cars, trucks, busses, trains, boats, and submersible vehicles, space vehicles including manned and unmanned orbital and sub-orbital vehicles, or any other vehicle or device, or in connection with industrial processes, or propulsion systems, or any other system or process having need for propulsion systems.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

## Claims

1. A method of operating an aircraft propulsion system (10; 20; 30) comprising:
propulsing an aircraft by a propulsor (2) powered by an energy storage system (8);
depleting energy stored in the energy storage system (8) in response to the propulsing;
pulsing on a turbine (6) whereby energy may be provided to the energy storage system (8);
replenishing, by the turbine (6), the energy stored in the energy storage system (8);
pulsing off the turbine (6) in response to the replenishing; and **characterised by**
permitting the propulsor (2) to windmill causing the propulsor (2) to act as a generator to recharge the energy storage system (8).

2. The method according to claim 1, wherein the pulsing off comprises retarding a throttle of the turbine (6) to a flight idle position.

3. The method according to claim 1, wherein the pulsing off comprises shutting down the turbine (6).

4. An aircraft with a propulsion system (10; 20; 30) comprising:
a first propulsor (2-1);
a first energy conversion system (4-1);
a first energy storage system (8-1); and
a first turbine (6-1),
wherein the first propulsor (2-1) is in electrical communication with the first energy conversion system (4-1), and
wherein the first energy conversion system (4-1) receives an energy storage system electrical energy from the first energy storage system (8-1) and provides conditioned energy storage system electrical energy to the first propulsor (2-1), and **characterised in that** the first propulsor (2-1) is configured to act as a generator for recharging the first energy storage system (8-1) in response to windmilling thereof.

5. The aircraft according to claim 4, wherein the first turbine (6-1) comprises a gas turbine.

6. The aircraft according to claim 4 or 5, further comprising a second propulsor (2-2) in electrical communication with the first energy conversion system (4-1).

7. The aircraft according to claim 4, 5 or 6, further comprising:
a/the second propulsor (2-2);
a second energy conversion system (4-2);
a second energy storage system (8-2);
a second turbine (6-2); and
an interconnection component (22) comprising electrical wiring between the first propulsor (2-1) and the first energy conversion system (4-1) and connecting to between the second propulsor (2-2) and the second energy conversion system (4-2),
wherein the second propulsor (2-2) is in electrical communication with the second energy conversion system (4-2),
wherein the second energy conversion system (4-2) receives the energy storage system electrical energy from at least one of: the second energy storage system (8-2) and the first energy storage system (8-1).

8. The aircraft according to any of claims 4 to 7, wherein the first propulsor (2-1) further comprises:
a first propeller (31-1);
a first electric motor (32-1) in mechanical communication with the first propeller (31-1); and
a first electric motor controller in electrical communication with the first electric motor (32-1),
wherein the first electric motor controller directs the first electric motor (32-1) to spin the first propeller (31-1).

9. The aircraft according to claim 8, wherein the first propulsor (2-1) further comprises:
a second propeller (31-2);
a second electric motor (32-2) in mechanical communication with the second propeller (31;2); and
a second electric motor controller in electrical communication with the second electric motor (32-2),
wherein the second electric motor controller directs the second electric motor (32-2) to spin the second propeller (31-2), and
wherein the first propeller (31-1) and the second propeller (31-2) counterrotate.

10. The aircraft according to any of claims 4 to 7, wherein the first propulsor (2-1) further comprises:
a first ducted fan;
a first electric motor (32-1) in mechanical communication with the first ducted fan; and
a first electric motor controller in electrical communication with the first electric motor (32-1),
wherein the first electric motor controller directs the first electric motor (32-1) to spin the first ducted fan.

11. The aircraft according to any of claims 4 to 10, wherein the first energy storage system (8-1) comprises:
a battery (38-1); and
a DC/DC converter/battery charger (37-1),
wherein electrical energy is conditioned by the DC/DC converter/battery charger (37-1) prior to storage in the battery (38-1), and
wherein electrical energy is conditioned by the DC/DC converter/battery charger (37-1) prior to delivery from the battery (38-1) to at least one of the first propulsor (2-1) and the first energy conversion system (4-1).

12. The aircraft according to claim 11, wherein the battery (38-1) comprises a lithium ion battery.

13. The aircraft according to any of claims 4 to 12, wherein the first energy conversion system (4-1) comprises:
a rectifier/inverter (34); and
a high-speed electric machine (35),
wherein the high-speed electric machine (35) at least one of:
receives the energy storage system electrical energy from the rectifier/inverter (34) and mechanically rotates the first turbine (6-1), and
receives mechanical energy from the first turbine (6-1) and generates a high-speed electric machine electrical energy communicated to the rectifier/inverter (34),
wherein the rectifier/inverter (34) at least one of:
conditions the energy storage system electrical energy and delivers the conditioned energy storage system electrical energy to the high-speed electric machine (35), and
conditions the high-speed electric machine electrical energy and delivers a conditioned high-speed electric machine electrical energy to the first energy storage system (8-1).

14. The aircraft according to claim 13,
wherein the conditioning the energy storage system electrical energy comprises converting the energy storage system electrical energy from direct current to alternating current, and
wherein the conditioning the high-speed electric machine electrical energy comprises converting the high-speed electric machine electrical energy from alternating current to direct current.

15. The aircraft according to any of claims 4 to 14, further comprising:
a/the second propulsor (2-2); and
an interconnection component (22) comprising electrical wiring disposed between the first propulsor (2-1) and the second propulsor (2-2) whereby the first propulsor (2-1) and the second propulsor (2-2) are connected in parallel.

## Patentansprüche

1. Verfahren zum Betreiben eines Antriebssystems (10; 20; 30) eines Luftfahrzeugs, umfassend:
Antreiben eines Luftfahrzeugs durch einen Antrieb (2), der von einem Energiespeichersystem (8) angetrieben wird;
Abbauen der Energie, die im Energiespeichersystem (8) gespeichert ist, als Reaktion auf das Antreiben;
Antasten einer Turbine (6), wodurch Energie zum Energiespeichersystem (8) geliefert werden kann;
Auffüllen durch die Turbine (6) der Energie, die im Energiespeichersystem (8) gespeichert ist;
Zutasten der Turbine (6) als Reaktion auf das Auffüllen; und
**gekennzeichnet dadurch, dass**
es dem Antrieb (2) ermöglicht wird, sich frei zu drehen, wodurch bewirkt wird, dass der Antrieb (2) als ein Generator fungiert, um das Energiespeichersystem (8) aufzuladen.

2. Verfahren nach Anspruch 1, wobei das Zutasten das Verstellen der Drossel der Turbine (6) auf eine Flugleerlaufposition umfasst.

3. Verfahren nach Anspruch 1, wobei das Zutasten das Abschalten der Turbine (6) umfasst.

4. Luftfahrzeug mit einem Antriebssystem (10; 20; 30), umfassend:
einen ersten Antrieb (2-1);
ein erstes Energieumwandlungssystem (4-1);
ein erstes Energiespeichersystem (8-1); und
eine erste Turbine (6-1),
wobei der erste Antrieb (2-1) in elektrischer Kommunikation mit dem ersten Energieumwandlungssystem (4-1) steht und
wobei das erste Energieumwandlungssystem (4-1) eine elektrische Energie des Energiespeichersystems vom ersten Energiespeichersystem (8-1) aufnimmt und konditionierte elektrische Energie des Energiespeichersystems dem ersten Antrieb (2-1) bereitstellt, und **dadurch gekennzeichnet, dass** der erste Antrieb (2-1) konfiguriert ist, um als ein Generator zum Wiederaufladen des ersten Energiespeichersystems (8-1) als Reaktion auf dessen Freidrehen zu fungieren.

5. Luftfahrzeug nach Anspruch 4, wobei die erste Turbine (6-1) eine Gasturbine umfasst.

6. Luftfahrzeug nach Anspruch 4 oder 5, ferner umfassend einen zweiten Antrieb (2-2) in elektrischer Kommunikation mit dem ersten Energieumwandlungssystem (4-1).

7. Luftfahrzeug nach Anspruch 4, 5 oder 6, ferner umfassend:
einen/den zweiten Antrieb (2-2);
ein zweites Energieumwandungssystem (4-2);
ein zweites Energiespeichersystem (8-2);
eine zweite Turbine (6-2); und
eine Verbindungskomponente (22), die eine elektrische Verdrahtung zwischen dem ersten Antrieb (2-1) und dem ersten Energieumwandlungssystem (4-1) umfasst und eine Verbindung zwischen dem zweiten Antrieb (2-2) und dem zweiten Energieumwandlungssystem (4-2) herstellt,
wobei der zweite Antrieb (2-2) in elektrischer Kommunikation mit dem zweiten Energieumwandlungssystem (4-2) steht,
wobei das zweite Energieumwandlungssystem (4-2) die elektrische Energie des Energiespeichersystems aus mindestens einem aus: dem zweiten Energiespeichersystem (8-2) und dem ersten Energiespeichersystem (8-1) aufnimmt.

8. Luftfahrzeug nach einem der Ansprüche 4 bis 7, wobei der erste Antrieb (2-1) ferner Folgendes umfasst:
einen ersten Propeller (31-1);
einen ersten Elektromotor (32-1) in mechanischer Kommunikation mit dem ersten Propeller (31-1); und
eine Steuerung des ersten Elektromotors in elektrischer Kommunikation mit dem ersten Elektromotor (32-1),
wobei die Steuerung des ersten Elektromotors den ersten Elektromotor (32-1) steuert, den ersten Propeller (31-1) zu drehen.

9. Luftfahrzeug nach Anspruch 8, wobei der erste Antrieb (2-1) ferner Folgendes umfasst:
einen zweiten Propeller (31-2);
einen zweiten Elektromotor (32-2) in mechanischer Kommunikation mit dem zweiten Propeller (31;2) und
eine Steuerung des zweiten Elektromotors in elektrischer Kommunikation mit dem zweiten Elektromotor (32-2),
wobei die Steuerung des zweiten Elektromotors den zweiten Elektromotor (32-2) steuert, den zweiten Propeller (31-2) zu drehen, und
wobei sich der erste Propeller (31-1) und der zweite Propeller (31-2) gegenläufig drehen.

10. Luftfahrzeug nach einem der Ansprüche 4 bis 7, wobei der erste Antrieb (2-1) ferner Folgendes umfasst:
ein erstes Mantelgebläse;
einen ersten Elektromotor (32-1) in mechanischer Kommunikation mit dem ersten Mantelgebläse; und
eine Steuerung des ersten Elektromotors in elektrischer Kommunikation mit dem ersten Elektromotor (32-1),
wobei die Steuerung des ersten Elektromotors den ersten Elektromotor (32-1) steuert, das erste Mantelgebläse zu drehen.

11. Luftfahrzeug nach einem der Ansprüche 4 bis 10, wobei das erste Energiespeichersystem (8-1) Folgendes umfasst:
eine Batterie (38-1); und
einen Gleichstromwandler/Batterieladegerät (37-1),
wobei die elektrische Energie vom Gleichstromwandler/Batterieladegerät (37-1) vor dem Speichern in der Batterie (38-1) konditioniert wird, und
wobei die elektrische Energie vom Gleichstromwandler/Batterieladegerät (37-1) vor der Lieferung von der Batterie (38-1) an mindestens einen aus dem ersten Antrieb (2-1) und dem ersten Energieumwandlungssystem (4-1) konditioniert wird.

12. Luftfahrzeug nach Anspruch 11, wobei die Batterie (38-1) eine Lithium-Ionen-Batterie umfasst.

13. Luftfahrzeug nach einem der Ansprüche 4 bis 12, wobei das erste Energieumwandlungssystem (4-1) Folgendes umfasst:
einen Gleichrichter/Umrichter (34); und
eine Hochgeschwindigkeitselektromaschine (35),
wobei die Hochgeschwindigkeitselektromaschine (35) mindestens eines aus Folgendem ausführt:
die elektrische Energie des Energiespeichersystems vom Gleichrichter/Umrichter (34) aufnehmen und die erste Turbine (6-1) mechanisch drehen, und
mechanische Energie von der ersten Turbine (6-1) aufnehmen und eine elektrische Energie der Hochgeschwindigkeitselektromaschine, die zum Gleichrichter/Umrichter (34) kommuniziert wird, erzeugen, wobei der Gleichrichter/Umrichter (34) mindestens eines aus Folgendem ausführt:
die elektrische Energie des Energiespeichersystems konditionieren und die konditionierte elektrische Energie des Energiespeichersystems an die Hochgeschwindigkeitselektromaschine (35) liefern, und
die elektrische Energie der Hochgeschwindigkeitselektromaschine konditionieren und eine konditionierte elektrische Energie der Hochgeschwindigkeitselektromaschine an das erste Energiespeichersystem (8-1) liefern.

14. Luftfahrzeug nach Anspruch 13,
wobei das Konditionieren der elektrischen Energie des Energiespeichersystems das Umwandeln der elektrischen Energie des Energiespeichersystems von Gleichstrom in Wechselstrom umfasst, und
wobei das Konditionieren der elektrischen Energie der Hochgeschwindigkeitselektromaschine das Umwandeln der elektrischen Energie der Hochgeschwindigkeitselektromaschine von Wechselstrom in Gleichstrom umfasst.

15. Luftfahrzeug nach einem der Ansprüche 4 bis 14, ferner umfassend:
einen/den zweiten Antrieb (2-2); und
eine Verbindungskomponente (22), die eine elektrische Verdrahtung umfasst, die zwischen dem ersten Antrieb (2-1) und dem zweiten Antrieb (2-2) angeordnet ist, wodurch der erste Antrieb (2-1) und der zweite Antrieb (2-2) parallel verbunden sind.

## Revendications

1. Procédé de fonctionnement d'un système de propulsion d'aéronef (10 ; 20 ; 30) comprenant :
la propulsion d'un aéronef par un propulseur (2) alimenté par un système de stockage d'énergie (8) ;
l'épuisement d'énergie stockée dans le système de stockage d'énergie (8) en réponse à la propulsion ;
l'envoi d'une impulsion à une turbine (6) moyennant quoi l'énergie peut être fournie au système de stockage d'énergie (8) ;
le réapprovisionnement, par la turbine (6), de l'énergie stockée dans le système de stockage d'énergie (8) ;
l'arrêt d'impulsion à la turbine (6) en réponse au réapprovisionnement ; et **caractérisé par**
l'autorisation du propulseur (2) à tourner en autorotation amenant le propulseur (2) à servir de générateur pour recharger le système de stockage d'énergie (8).

2. Procédé selon la revendication 1, dans lequel l'arrêt d'impulsion comprend le ralentissement d'une manette des gaz de la turbine (6) à une position de ralenti en vol.

3. Procédé selon la revendication 1, dans lequel l'arrêt d'impulsion comprend l'arrêt de la turbine (6).

4. Aéronef doté d'un système de propulsion (10 ; 20 ; 30) comprenant :
un premier propulseur (2-1) ;
un premier système de conversion d'énergie (4-1) ;
un premier système de stockage d'énergie (8-1) ; et
une première turbine (6-1),
dans lequel le premier propulseur (2-1) est en communication électrique avec le premier système de conversion d'énergie (4-1), et
dans lequel le premier système de conversion d'énergie (4-1) reçoit une énergie électrique de système de stockage d'énergie en provenance du premier système de stockage d'énergie (8-1) et fournit une énergie électrique de système de stockage d'énergie conditionnée au premier propulseur (2-1), et **caractérisé en ce que** le premier propulseur (2-1) est configuré pour servir de générateur pour recharger le premier système de stockage d'énergie (8-1) en réponse au fait qu'il tourne en autorotation.

5. Aéronef selon la revendication 4, dans lequel la première turbine (6-1) comprend une turbine à gaz.

6. Aéronef selon la revendication 4 ou 5, comprenant en outre un second propulseur (2-2) en communication électrique avec le premier système de conversion d'énergie (4-1).

7. Aéronef selon la revendication 4, 5 ou 6, comprenant en outre :
un/le second propulseur (2-2) ;
un second système de conversion d'énergie (4-2) ;
un second système de stockage d'énergie (8-2) ;
une seconde turbine (6-2) ; et
un composant d'interconnexion (22) comprenant un câblage électrique entre le premier propulseur (2-1) et le premier système de conversion d'énergie (4-1) et se connectant entre le second propulseur (2-2) et le second système de conversion d'énergie (4-2),
dans lequel le second propulseur (2-2) est en communication électrique avec le second système de conversion d'énergie (4-2),
dans lequel le second système de conversion d'énergie (4-2) reçoit l'énergie électrique de système de stockage d'énergie en provenance d'au moins l'un : du second système de stockage d'énergie (8-2) et du premier système de stockage d'énergie (8-1).

8. Aéronef selon l'une quelconque des revendications 4 à 7, dans lequel le premier propulseur (2-1) comprend en outre :
une première hélice (31-1) ;
un premier moteur électrique (32-1) en communication mécanique avec la première hélice (31-1) ; et
un premier dispositif de commande de moteur électrique en communication électrique avec le premier moteur électrique (32-1),
dans lequel le premier dispositif de commande de moteur électrique ordonne au premier moteur électrique (32-1) de gyrer la première hélice (31-1).

9. Aéronef selon la revendication 8, dans lequel le premier propulseur (2-1) comprend en outre :
une seconde hélice (31-2) ;
un second moteur électrique (32-2) en communication mécanique avec la seconde hélice (31 ; 2) ; et
un second dispositif de commande de moteur électrique en communication électrique avec le second moteur électrique (32-2),
dans lequel le second dispositif de commande de moteur électrique ordonne au second moteur électrique (32-2) de gyrer la seconde hélice (31-2), et
dans lequel la première hélice (31-1) et la seconde hélice (31-2) tournent en contre-rotation.

10. Aéronef selon l'une quelconque des revendications 4 à 7, dans lequel le premier propulseur (2-1) comprend en outre :
une première soufflante carénée ;
un premier moteur électrique (32-1) en communication mécanique avec la première soufflante carénée ; et
un premier dispositif de commande de moteur électrique en communication électrique avec le premier moteur électrique (32-1),
dans lequel le premier dispositif de commande de moteur électrique ordonne au premier moteur électrique (32-1) de gyrer la première soufflante carénée.

11. Aéronef selon l'une quelconque des revendications 4 à 10, dans lequel le premier système de stockage d'énergie (8-1) comprend :
une batterie (38-1) ; et
un chargeur de batterie/convertisseur courant continu/courant continu (37-1),
dans lequel l'énergie électrique est conditionnée par le chargeur de batterie/convertisseur courant continu/courant continu (37-1) avant stockage dans la batterie (38-1), et
dans lequel l'énergie électrique est conditionnée par le chargeur de batterie/convertisseur courant continu/courant continu (37-1) avant distribution de la batterie (38-1) à au moins l'un du premier propulseur (2-1) et du premier système de conversion d'énergie (4-1).

12. Aéronef selon la revendication 11, dans lequel la batterie (38-1) comprend une batterie au lithium-ion.

13. Aéronef selon l'une quelconque des revendications 4 à 12, dans lequel le premier système de conversion d'énergie (4-1) comprend :
un redresseur/onduleur (34) ; et
une machine électrique grande vitesse (35),
dans lequel la machine électrique grande vitesse (35) au moins :
reçoit l'énergie électrique de système de stockage d'énergie en provenance du redresseur/onduleur (34) et fait tourner mécaniquement la première turbine (6-1), et
reçoit une énergie mécanique en provenance de la première turbine (6-1) et génère une énergie électrique de machine électrique grande vitesse communiquée au redresseur/onduleur (34),
dans lequel le redresseur/onduleur (34) au moins :
conditionne l'énergie électrique de système de stockage d'énergie et distribue l'énergie électrique de système de stockage d'énergie conditionnée à la machine électrique grande vitesse (35), et
conditionne l'énergie électrique de machine électrique grande vitesse et distribue une énergie électrique de machine électrique grande vitesse conditionnée au premier système de stockage d'énergie (8-1).

14. Aéronef selon la revendication 13,
dans lequel le conditionnement de l'énergie électrique de système de stockage d'énergie comprend la conversion de l'énergie électrique de système de stockage d'énergie d'un courant continu à un courant alternatif, et
dans lequel le conditionnement de l'énergie électrique de machine électrique grande vitesse comprend la conversion de l'énergie électrique de machine électrique grande vitesse d'un courant alternatif à un courant continu.

15. Aéronef selon l'une quelconque des revendications 4 à 14, comprenant en outre :
un/le second propulseur (2-2) ; et
un composant d'interconnexion (22) comprenant un câblage électrique disposé entre le premier propulseur (2-1) et le second propulseur (2-2), moyennant quoi le premier propulseur (2-1) et le second propulseur (2-2) sont connectés en parallèle.
